# EUROPÄISCHE PATENTSCHRIFT

(11) **EP 2 431 218 B1**
(45) Veröffentlichungstag und Bekanntmachung des Hinweises auf die Patenterteilung: **02.03.2016**
(21) Anmeldenummer: 11007457.2
(22) Anmeldetag: 14.09.2011
(51) Int. Cl.: B60N 2/02, B60N 2/18, B60N 2/39

(54) **Verfahren zur Ansteuerung einer zur Verkippung eines Sitzes eines Kraftfahrzeugs ausgebildeten Aktorik und Kraftfahrzeug**
Method for controlling an actuator used to tilt a seat of a motor vehicle and motor vehicle
Procédé de commande d'un actionnement développé pour le basculement d'un siège de véhicule automobile et véhicule automobile

(30) Priorität: 21.09.2010 DE 102010046205
(43) Veröffentlichungstag der Anmeldung: 21.03.2012
(73) Patentinhaber: Audi AG, 85045 Ingolstadt (DE)
(72) Erfinder: Bär, Michael, 85049 Ingolstadt (DE); Meitinger, Karl-Heinz, Dr., 81667 München (DE); Siedersberger, Karl-Heinz, Dr., 85049 Ingolstadt (DE); Müller, Christoph, 97723 Oberthulba (DE)
(74) Vertreter: Thielmann, Frank

(56) Entgegenhaltungen:
- EP-A2- 1 577 151
- WO-A1-01/79020
- WO-A1-01/85487
- DE-A1- 19 959 411
- DE-A1-102007 000 623
- DE-B3- 10 252 204

## Beschreibung

Die Erfindung betrifft ein Verfahren zur Ansteuerung einer zur Verkippung eines Sitzes eines Kraftfahrzeugs um einen Wankwinkel und/oder einen Nickwinkel ausgebildeten Aktorik sowie ein zugehöriges Kraftfahrzeug.

Allgemein wurden Vorschläge bekannt, den Einfluss von Querbeschleunigungskräften in einem Kraftfahrzeug, wie sie auf einen Fahrer und/oder einen Passagier wirken, durch entsprechende Gegenmaßnahmen zu kompensieren.

So wurde beispielsweise in der DE 690 00 427 T2 vorgeschlagen, eine Neigungseinrichtung für einen Kraftfahrzeugsitz so anzusteuern, dass der Einfluss der Schleuderkraft bei Kurvenfahrt vermindert und dadurch der Fahrkomfort erhöht wird. Daher sind Mittel vorgesehen, die Querbeschleunigung zu erkennen, der der Kraftfahrzeugsitz ausgesetzt ist, sowie weitere, durch diese Erkennungsmittel gesteuerte Mittel zum Schwenken des Sitzes um eine bestimmte Achse.

Dabei tritt jedoch der hauptsächliche Nachteil auf, dass bei einer Regelung, die auf aktuellen Messwerten basiert, die Regelung erst mit dem Auftreten einer Abweichung eingreift und infolge dessen die Wirkung erst nach einer gewissen Zeitspanne eintreten kann. Dies führt zu einem Zeitversatz, der vom Fahrer des Kraftfahrzeugs als negativ empfunden werden kann.

In der nachveröffentlichten deutschen Patentanmeldung DE 10 2009 014 747.0 der Anmelderin, deren Offenbarungsgehalt hiermit vollumfänglich in den der vorliegenden Beschreibung aufgenommen wird, wird vorgeschlagen, zur Kompensation einer Querbeschleunigung aktive Federungssysteme, auch Active Body Control (ABC) genannt, oder Systeme mit aktiven Stabilisatoren einzusetzen, wobei ein zukünftiger Verlauf der Querbeschleunigung auf der Basis eines Fahrzeugmodells für eine vorausschauende Zeitdauer ermittelt wird. Konkret geht es dort um ein Verfahren zur Ansteuerung von die Wankbewegung eines Fahrzeugs beeinflussenden Aktoren, insbesondere Aktoren eines aktiven Federungssystems oder eines Systems mit aktiven Stabilisatoren, wobei das Fahrzeug mit einer Funktion für eine vorausschauende Längs- und Querführung mit einer Vorausschauzeitdauer ausgestattet ist, wobei zunächst eine die zukünftige Querbeschleunigung beeinflussende Größe aus der Funktion für eine vorausschauende Längs- und Querführung ermittelt wird, hieraus der zukünftige Verlauf der Querbeschleunigung für die Vorausschauzeitdauer ermittelt wird, woraus die Querneigung des Fahrzeugs, die zur wenigstens teilweisen Kompensation des zukünftigen Verlaufs der auf die Insassen wirkenden Querbeschleunigung für die Vorausschauzeitdauer erforderlich ist, berechnet werden kann. Schließlich werden die Aktoren derart gesteuert, dass das Fahrzeug eine der berechneten Querneigung entsprechende Wankbewegung zeitlich zumindest phasengleich mit dem zukünftigen Verlauf der Querbeschleunigung während der Vorausschauzeitdauer ausführt. So soll ein aktives "in die Kurve neigen" bei teilautomatischer oder automatischer Fahrt ermöglicht werden, ohne dass Komforteinbußen auftreten. Denn durch die Vorsteuerung, die die automatische Fahrzeugführung zulässt, können das zukünftige Wanken und die zukünftige Querbeschleunigung berechnet werden und dementsprechend die Aktoren des Federungssystems oder der Stabilisatoren eines entsprechenden Systems so angesteuert werden, dass nahezu kein Phasenverzug zwischen dem Aufbau der Querbeschleunigung und dem Ausgleich durch das aktive Wanken entsteht und hierdurch der Fahrer oder die Fahrzeuginsassen keinen unrunden und damit auch keinen unangenehmen Querbeschleunigungsdruck wahrnehmen.

Dabei bestehen jedoch auch in diesem nachveröffentlichten Stand der Technik einige Nachteile, nämlich zum einen, dass die Achse, um die das Fahrzeug wankt, durch die Vertikalaktoren nicht frei bestimmt werden kann. Die Achse kann somit nicht in einen für die auf einen Sitz befindliche Person geeigneten Punkt gelegt werden. Insbesondere ist es nicht möglich, die Achse für alle Insassen des Fahrzeug physiologisch ideal zu legen.

Aus der DE10252204 ist ein Verfahren gemäß dem Oberbegriff des Anspruchs 1 und ein Kraftfahrzeug gemäß dem Oberbegriff des Anspruchs 13 bekannt.

Der Erfindung liegt die Aufgabe zugrunde, ein Ansteuerungsverfahren anzugeben, durch das eine verbesserte und den Komfort eines Insassen weiter erhöhende Ansteuerung von Aktoren eines Sitzes gegeben ist.

Zur Lösung dieser Aufgabe ist bei einem Verfahren der eingangs genannten Art erfindungsgemäß vorgesehen, dass aus einem für eine Vorausschaudauer vorausberechneten Quer- und/oder Längsbeschleunigungsverlauf ein Verlauf eines die auf eine auf dem Sitz sitzende Person wirkende Querbeschleunigung wenigstens teilweise kompensierenden Wankwinkels und/oder eines die auf eine auf dem Sitz sitzende Person wirkende Längsbeschleunigung wenigstens teilweise kompensierenden Nickwinkels des Sitzes ermittelt wird und die Aktorik zur zumindest annähernd phasengleich mit dem Querund/oder Längsbeschleunigungsverlauf erfolgenden Verkippung des Sitzes anhand des Wankwinkelverlaufs und/oder des Nickwinkelverlaufs angesteuert wird.

Erfindungsgemäß ist also vorgesehen, die Aktorik eines aktiven Sitzes eines Kraftfahrzeugs basierend auf einem vorausberechneten Quer- und/oder Längsbeschleunigungsverlauf anzusteuern. Da dann Quer- und/oder Längsbeschleunigungswerte bereits, zumindest für die Vorausschaudauer, im Voraus bekannt sind, ist es möglich, die Aktorik letztlich phasengleich anzusteuern, so dass eine deutlich verbesserte Kompensation erreicht wird. Es ergibt sich somit im Ergebnis für einen Insassen eine angenehmere, komfortorientiertere Fahrt, nachdem der übliche Regelungsverzug weitgehend beseitigt werden kann.

Erfindungsgemäß wird am Sitz des Insassen selbst gearbeitet, so dass es verbessert möglich ist, die entsprechenden Achsen, also die Wankachse und/oder die Nickachse, so zu legen, dass für den Fahrer negative Effekte aufgrund der Lage der Wankachse, insbesondere die sogenannte "motion sickness", reduziert werden.

Ein weiterer Vorteil des erfindungsgemäßen Verfahrens ist es im Übrigen, dass letztlich keine Blockierung eines aktiven Federungssystems oder eines Systems mit aktiven Stabilisatoren auftritt, so dass keine Priorisierungsregelung, die dem Komfort abträglich wäre, notwendig ist. Zudem bleiben die Karosserieaufbaubewegungen wie in bisherigen Fahrzeugen erhalten.

Zur Ausgestaltung der Aktorik mit wenigstens einem Aktor bestehen mehrere Möglichkeiten, die zumindest teilweise bereits im Stand der Technik beschrieben sind. So kann beispielsweise vorgesehen sein, wenigstens zwei an verschiedenen Punkten des Sitzes angreifende Aktoren vorzusehen, um eine Verkippung zu erreichen. Bei vier beispielsweise jeweils an den Ecken eines Sitzes vorgesehenen Aktoren, wofür beispielsweise pneumatische und/oder hydraulische Aktoren verwendet werden können, ist eine Verkippung um eine Wankachse genauso möglich wie eine Verkippung um eine Nickachse. Jedoch sind zur Verwendung im erfindungsgemäßen Verfahren auch andere Ausgestaltungen der Aktorik denkbar, beispielsweise, indem der verkippbare Teil des Fahrersitzes in einer Führung, beispielsweise einer Kulisse, geführt ist. Eine derartige Führung kann so ausgestaltet werden, dass die Wankachse beispielsweise auch in den Bereich des Herzens, also wenigstens in dem Bereich des Oberkörpers einer auf dem Sitz sitzenden Person, gelegt werden kann. Über entsprechende Antriebsmittel, beispielsweise ein Zahnradgetriebe, kann der Sitz dann in der Führung verkippt werden. Auch andere Ausgestaltungen einer Aktorik zur Verkippung eines Sitzes eines Kraftfahrzeugs können selbstverständlich verwendet werden, solange eine Verkippung um einen Wandwinkel und/oder einen Nickwinkel möglich ist.

Die erfindungsgemäß beschriebene Verkippung um einen Nickwinkel zur Kompensation eines Längsbeschleunigungsverlaufes kann besonders sinnvoll auf einem Passagiersitz, also einem Nicht-Fahrersitz, eingesetzt werden. Insbesondere dann, wenn einer zu chauffierenden Person ein maximal möglicher Komfort bereitet werden soll, kann hierdurch eine Erweiterung und Verbesserung der Kompensation erreicht werden.

In einer besonders vorteilhaften Ausgestaltung des erfindungsgemäßen Verfahrens kann vorgesehen sein, dass der Quer- und/oder Längsbeschleunigungsverlauf aus Daten eines teilautomatischen oder vollautomatischen Fahrzeugsystems zur Quer- und/oder Längsführung des Kraftfahrzeugs ermittelt wird. Das bedeutet, dass wenigstens ein Teil der Bewegung des Kraftfahrzeugs autonom durch ein solches Fahrzeugsystem gesteuert werden kann. In diesem Fall ist also letztlich wenigstens teilweise vorgegeben, wie sich das Kraftfahrzeug in der Zukunft bewegen wird, so dass der vorausberechnete Quer- und/oder Längsbeschleunigungsverlauf besonders verlässlich wird. Die besten Ergebnisse lassen sich bei einem vollautomatischen Fahrzeugsystem, welches letztlich zur autonomen Fahrzeugführung ausgebildet ist, erzielen.

In diesem Zusammenhang kann beispielsweise vorgesehen sein, dass wenigstens eine die zukünftige Quer- und/oder Längsbeschleunigung beeinflussende Größe, insbesondere von dem teilautomatischen oder vollautomatischen Fahrzeugsystem zur Quer- und/oder Längsführung des Kraftfahrzeugs, ermittelt wird. Hieraus kann dann der vorausberechnete Quer- und/oder Längsbeschleunigungsverlauf bestimmt werden, beispielsweise auf der Basis eines Fahrzeugmodells für die Vorausschaudauer. Während die zukünftige Längsbeschleunigung für die Vorausschaudauer in dem Fahrzeugsystem meist ohnehin vorliegt, kann beispielsweise vorgesehen sein, dass der Lenkwinkel und die Fahrzeuggeschwindigkeit als die zukünftige Querbeschleunigung beeinflussende Größen ermittelt werden. Auch können zusätzlich der Kurvenverlauf und/oder der Verlauf der Fahrspur als solche Größe bzw. Größen ermittelt werden. Schließlich sind auch die Fahrzeuggeschwindigkeiten und der Kurvenverlauf und der Verlauf der Fahrspur geeignet, als die die zukünftige Querbeschleunigung beeinflussenden Größen ermittelt zu werden.

Zweckmäßigerweise kann zudem vorgesehen sein, dass zusätzlich die Fahrbahnneigung und/oder deren zukünftiger Verlauf ermittelt wird, wobei die aktuelle Fahrzeugneigung beispielsweise mittels Neigungssensorik sensiert und bei der Berechnung des Wankwinkelverlaufs und/oder des Nickwinkelverlaufs berücksichtigt wird. Zusätzlich kann auch bei vorhandenen Straßenverlaufsdaten, die durch ein Navigationssystem oder alternativ über bordeigene Sensoren, wie beispielsweise Laserscanner, bereitgestellt werden, der zukünftige Verlauf der Fahrbahnneigung berücksichtigt werden.

Teilautomatische oder vollautomatische Fahrzeugsysteme zur Quer- und/oder Längsführung sind beispielsweise automatische Spurhaltesysteme oder Spurwechselsysteme wie auch Stauassistenten. Solche Systeme können eine Querregelung und eine Längsregelung aufweisen.

Mit besonderem Vorteil kann vorgesehen sein, dass die Wankachse und/oder die Nickachse der Aktorik verändert wird. Es wird also vorgeschlagen, von fixen Achsen abzuweichen, um eine gegebenenfalls dynamische Änderung der Wankachse zu ermöglichen, da diese ebenfalls den Komfort bzw. das Motionsickness-Risiko beeinflusst, so dass in diesen Bereichen eine Verbesserung erzielt werden kann. Die Achse kann für alle Insassen physiologisch ideal gelegt werden. In dieser Ausgestaltung wird also letztlich eine Aktorik verwendet, die eine Veränderung der Wankachse und/oder der Nickachse erlaubt.

Wie bereits erwähnt, kann in einer zweckmäßigen Ausführungsform eine im Bereich des Herzens einer auf dem Sitz sitzenden Person verlaufende Wankachse und/oder Nickachse verwendet werden. Wie beispielsweise in Bezug auf Achterbahnen Werner Stengel bereits vor einiger Zeit realisiert hat, ist eine Lage einer Drehachse im Herzbereich optimal für den Komfort eines Insassen (sogenanntes Herzlinienprinzip). Mithin kann mit einer derart positionierten Wankachse und/oder Nickachse eine weitere Komfortsteigerung erreicht werden.

In weiterer vorteilhafter Ausgestaltung der vorliegenden Erfindung kann vorgesehen sein, dass für wenigstens zwei eine Aktorik umfassende Sitze des Kraftfahrzeugs die Kompensation anhand unterschiedlicher Kompensationsparameter eingestellt wird, wobei die Kompensationsparameter insbesondere die Stärke der Kompensation und/oder die Wankachse und/oder die Nickachse enthalten. Auf diese Weise ist es folglich möglich, individuell auf die entsprechenden Insassen einzugehen, was bei einer Kompensation mittels das gesamte Fahrwerk betreffenden Systemen nicht möglich wäre. Dabei kann zum einen vorgesehen sein, dass der Grad der Kompensation des zukünftigen Verlaufs der Quer- und/oder Längsbeschleunigung im Hinblick auf komforttechnische oder fahrsicherheitstechnische Gründe bestimmt wird. So kann beispielsweise vorgesehen sein, dass eine Kompensation, insbesondere am Fahrersitz, nur teilweise durchgeführt wird, wobei es auch denkbar ist, dort vollständig auf eine Kompensation zu verzichten.

Möglich ist es jedoch auch, dass die unterschiedlichen Kompensationsparameter durch einen Benutzer ausgewählt werden. Dann kann beispielsweise vorgesehen sein, dass die Wankachse und/oder die Nickachse und/oder der Grad der Kompensation und dergleichen für Sitze des Kraftfahrzeugs, insbesondere die Passagiersitze, gewählt werden können. Auf diese Weise besteht die Möglichkeit, beispielsweise die Wankachse und/oder die Nickachse auf die Größe einer aktuell auf dem Sitz beförderten Person anzugleichen oder deren Komfortempfinden individuell gerecht zu werden, indem andere Kompensationsparameter eingestellt werden. In diesem Zusammenhang ist es zweckmäßig, wenn wenigstens ein Satz von Kompensationsparametern als ein Profil abgespeichert wird und/oder einer aus mehreren abgespeicherten Sätzen von Kompensationsparametern ausgewählt wird. Während selbstverständlich auch solche "Wankprofile" bereits vom Hersteller vorgegeben abgespeichert und dann von einem Benutzer gewählt werden können, ist es selbstverständlich auch denkbar, dass ein Benutzer einen Satz von Kompensationsparametern selbst definiert und diesen zum späteren Abruf abspeichern kann, beispielsweise über ein entsprechendes Mensch-Maschine-Interface.

Es kann vorgesehen sein, dass in einem Chauffeursmodus eine Verkippung der Sitze zur Kompensation nur für wenigstens einen Passagiersitz erfolgt. Das erfindungsgemäße Verfahren kann also besonders vorteilhaft im Chauffeurbetrieb eingesetzt werden, wobei die Kompensation von Quer- und Längskräften nur auf den wenigstens einen Passagier im Kraftfahrzeug wirkt. Der Fahrer spürt weiterhin wie bekannt die Quer- und Längsbeschleunigungen und kann seine Fahrweise dementsprechend anpassen bzw. bei der Verwendung einer teil- oder vollautomatischen autonomen Fahrzeugführung verbessert die aktuelle Fahrsituation wahrnehmen und gegebenenfalls eingreifen.

Gerade bei teilautomatischen Fahrzeugsystemen zur Quer- und Längsführung des Kraftfahrzeugs, aber auch bei vollautomatischen Fahrzeugsystemen wird es unter Umständen vorkommen, dass der vorausberechnete Quer- und/oder Längsbeschleunigungsverlauf nicht exakt nachverfolgt werden kann, das bedeutet, es treten Abweichungen auf, die sich dann in einer nicht ganz optimalen Kompensation äußern können. Daher kann in besonders vorteilhafter Ausgestaltung der vorliegenden Erfindung eine Nachregelung vorgesehen sein, bei der wenigstens ein fahrdynamischer Sensor, insbesondere ein Querbeschleunigungssensor und/oder ein Längsbeschleunigungssensor und/oder ein Wankwinkelsensor und/oder ein Nickwinkelsensor verwendet werden, deren Sensordaten im Rahmen einer Nachregelung verwendet werden. Auf diese Weise kann also eine Abweichung, die in vielen Fällen klein gegenüber dem ermittelten Wankwinkelverlauf und/oder Nickwinkelverlauf sein dürfte, gemessen und berücksichtigt werden. Konkret kann vorgesehen sein, dass die vorausberechnete Fahrdynamik mit der gemessenen Fahrdynamik verglichen wird und bei Abweichungen eine Korrektur der Stellgrößen zur Ansteuerung der Aktorik erfolgt. Es hat sich gezeigt, dass bei einer solchen kleineren Nachregelung, trotzdem auf der Basis von aktuellen Messdaten gearbeitet wird, dennoch eine Verbesserung der Gesamtkompensation erreicht werden kann, nachdem die Abweichungen letztlich eher klein sind und die Aktoren schnell auf diese reagieren können.

In konkreter Ausgestaltung des Verfahrens kann zur Ansteuerung der Aktorik wenigstens eine Stellgröße auf der Basis eines Sitz-Aktormodells berechnet werden. Insbesondere kann dabei vorgesehen sein, dass der Zeitpunkt zur Ansteuerung der Aktorik mit der Stellgröße auf der Basis eines Aktormodells bestimmt wird. So kann der richtige Zeitpunkt zur Ansteuerung der Aktoren erhalten werden, um so einen Phasenverzug zwischen dem Aufbau der Quer- und/oder Längsbeschleunigung und dem aktiven Wanken und/oder Nicken im Wesentlichen zu vermeiden.

In einer Weiterbildung kann vorgesehen sein, dass bei wenigstens einer vorgegebenen Fahrsituation zumindest am Fahrersitz keine Kompensation der Querbeschleunigung und/oder Längsbeschleunigung erfolgt. Derartige Fahrsituationen sind solche, in denen es nicht sinnvoll ist, aus Gründen des Fahrkomforts oder der Fahrsicherheit, die zukünftig sich einstellende Querbeschleunigung und/oder Längsbeschleunigung vollständig, auch nicht teilweise zu kompensieren. Dies betrifft vor allem sicherheitskritische Fahrsituationen mit einem schnellen Richtungswechsel, wo es sinnvoll ist, die heftig auftretenden Querbeschleunigungen nicht zu kompensieren, um den Fahrer die sicherheitskritische Situation auch haptisch empfinden zu lassen.

Neben dem Verfahren betrifft die vorliegende Erfindung auch ein Kraftfahrzeug, umfassend wenigstens einen Sitz mit einer zur Verkippung des Sitzes um einen Wankwinkel und/oder einen Nickwinkel ausgebildeten Aktorik und ein zur Ansteuerung der Aktorik ausgebildetes Steuergerät, das zur Durchführung des erfindungsgemäßen Verfahrens ausgebildet ist. Sämtliche Ausführungen bezüglich des erfindungsgemäßen Verfahrens lassen sich analog auf das erfindungsgemäße Kraftfahrzeug übertragen, so dass auch mit dem erfindungsgemäßen Kraftfahrzeug die erfindungsgemäß erreichbaren Vorteile erhalten werden können. Insbesondere kann das Kraftfahrzeug zusätzlich ein teilautomatisches oder vollautomatisches Fahrzeugsystem zur Quer- und/oder Längsführung des Kraftfahrzeugs umfassen, von dem Daten zur Ermittlung des Quer- und/oder Längsbeschleunigungsverlaufs ermittelt werden können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: ein erfindungsgemäßes Kraftfahrzeug,
- Fig. 2: ein Blockdiagramm zur Durchführung des erfindungsgemäßen Verfahrens,
- Fig. 3: eine mögliche Realisierung einer Aktorik für einen Sitz, und
- Fig. 4: eine weitere mögliche Realisierung der Aktorik für einen Sitz.

Der Einfachheit halber wird das erfindungsgemäße Verfahren im Folgenden beispielhaft für den Fall allein einer Wankregelung zur Kompensation eines zukünftigen Querbeschleunigungsverlaufs beschrieben. Selbstverständlich lassen sich sämtliche Ausführungen auch auf eine Kompensation eines Längsbeschleunigungsverlaufs durch einen Nickwinkel übertragen.

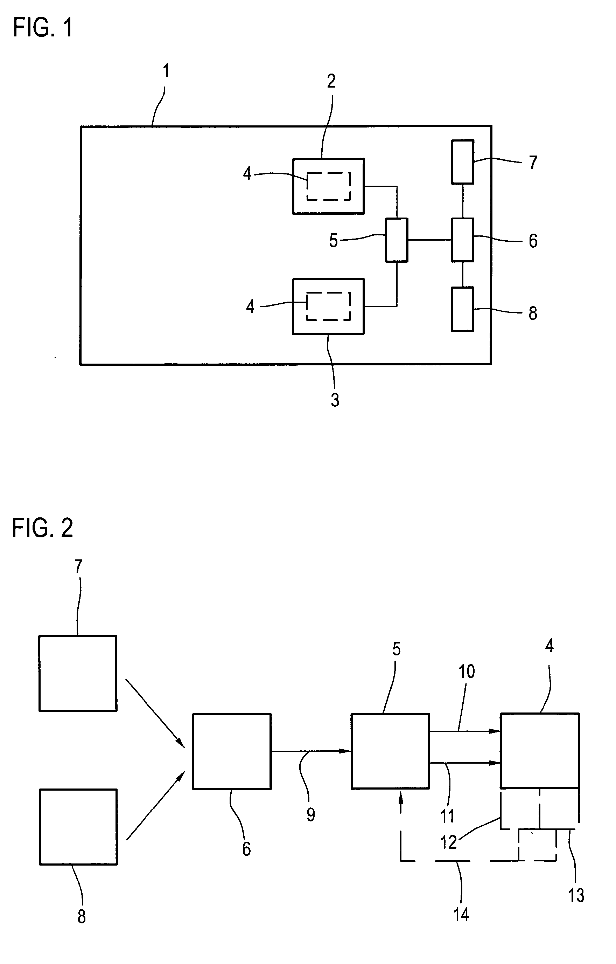

Fig. 1 zeigt eine Prinzipskizze eines erfindungsgemäßen Kraftfahrzeugs, welches zwei Einzelsitze, nämlich einen Fahrersitz 2 und eine Passagiersitz 3, aufweist. An beiden Sitzen 2, 3 ist jeweils eine Aktorik 4 vorgesehen, die zur Verkippung des jeweiligen Sitzes 2, 3 um eine Wankachse, die veränderbar sein kann, ausgebildet ist.

Gesteuert wird der Betrieb der Aktorik 4 durch ein dediziertes Steuergerät 5, welches über einen Fahrzeugbus in Verbindung mit weiteren Fahrzeugsystemen steht. Dargestellt hier ist hauptsächlich ein vollautomatisches Fahrzeugsystem 6 zur Längsführung und Querführung des Kraftfahrzeugs 1, welches also autonom die Bewegung des Kraftfahrzeugs 1 steuern kann. Das Fahrzeugsystem 6 erhält die zum Betrieb notwendigen Informationen aus einer Umfeldsensorik 7, umfassend beispielsweise eine Kamera, wenigstens einen Lidar-Sensor, wenigstens einen Radar-Sensor, wenigstens einen PMD-Sensor und dergleichen. Außerdem können Daten von weiteren Fahrzeugsystemen 8, beispielsweise ergänzender Sensorik und/oder eines Navigationssystems, vorgesehen sein, aus denen beispielsweise prädiktive Streckendaten (PSD) erhalten werden können.

Das Steuergerät 5 ist dabei zur Durchführung des erfindungsgemäßen Verfahrens ausgebildet, welches nun mit Bezug auf Fig. 2 näher erläutert werden soll. Wie bereits erwähnt, empfängt das Steuergerät der autonomen Fahrzeugführung, also das Steuergerät des Systems 6, zu seinem Betrieb die Eingabedaten der Umfeldsensorik 7 und der weiteren Fahrzeugsysteme 8. Hieraus wird letztlich eine geplante Trajektorie bestimmt, die durch verschiedene Größen beschrieben sein kann. Mit einer ergänzenden Sensorik kann beispielsweise auch die Fahrbahnneigung quer zur Fahrtrichtung sensiert werden, insbesondere auch der weitere Verlauf der Fahrbahnneigung bis zum Ende einer Vorausschaudauer, für die das Fahrzeugsystem 6 vorausplant. Ein weiterer Verlauf der Fahrbahnneigung kann beispielsweise aus den Straßenverlaufsdaten eines Navigationssystems bereitgestellt werden.

Die Daten bzw. Größen, die die beplante Trajektorie beschreiben, können ein zukünftiger Lenkwinkelverlauf und ein zukünftiger Geschwindigkeitsverlauf sein. Diese Daten werden, gemeinsam mit dem zukünftigen Verlauf der seitlichen Fahrbahnneigung, von dem Fahrzeugsystem 6 an das Steuergerät 5 weitergeleitet. Dort wird mittels eines geeigneten Fahrzeugmodells ein zukünftiger Querbeschleunigungsverlauf der auf die Insassen wirkenden Querbeschleunigung bis zum Ende der Vorausschaudauer berechnet, wobei die Berechnung insbesondere sitzspezifisch für den Fahrersitz 2 und den Passagiersitz 3 erfolgen kann.

Anschließend berechnet das Steuergerät 5 aus diesem zukünftigen Querbeschleunigungsverlauf die notwendige Querneigung des jeweiligen Sitzes 2, 3, um diese Querbeschleunigung vollständig oder teilweise durch eine Verkippung des Fahrzeugsitzes 2 oder 3 um einen Wankwinkel auszugleichen, das bedeutet, es wird ein Wankwinkelverlauf bestimmt. Zudem kann zusätzlich, falls eine dynamische Wankachse vorgesehen ist (nur bei durch die Aktorik 4 veränderbarer Wankachse), ein Wankachsenverlauf ermittelt werden. Der Wankwinkelverlauf, Pfeil 10, und die Wankachse oder der Wankachsenverlauf, Pfeil 11, werden als Stellgrößen der jeweiligen Aktorik 4 zugeführt.

Um eine Phasengleichheit zwischen dem Aufbau der zukünftig eintretenden Querbeschleunigung und dem aktiven Wanken sicherzustellen, wird auch durch das Steuergerät 5 anhand eines Aktorikmodells der Aktorik 4 die Verzögerung berechnet, die bei der berechneten Stellgröße bis zum Eintreten der Wirkung auftritt. Die Aktorik 4 wird entsprechend der berechneten Verzögerung, die ja in den Wankwinkelverlauf eingeht, von dem Steuergerät 5 entsprechend angesteuert, um somit die rechtzeitige Einstellung der Querneigung des Sitzes 2, 3 sicherzustellen.

Das erfindungsgemäße Verfahren bietet nun zusätzlich die Möglich, über die lokale Betrachtung der einzelnen Sitze 2, 3 hinaus auch eine individuelle Einstellung an den einzelnen Sitzen vorzunehmen. Hierzu sind Wankprofile in dem Steuergerät 5 abgelegt, die durch einen Benutzer für einen Sitz 2, 3 ausgewählt und/oder sogar verändert werden können. Die Wankprofile enthalten einen Satz von Kompensationsparametern, wobei hier der Grad der Kompensation eingestellbar ist. Denkbar ist es auch, zusätzlich eine eigene Definition der Wankachse zu wählen, wenn diese durch die Aktorik 4 verschiebbar ist. Auch in solchen Fällen wird natürlich gemäß des Pfeils 11 die benutzerseitig ausgewählte Wankachse als Stellgröße in die Aktorik 4 übertragen. Es kann vorgesehen sein, dass für den Fahrersitz 2 nur eine beschränkte Anzahl an auswählbaren Wankprofilen zur Verfügung steht, da es aus sicherheitstechnischen Gründen sinnvoll sein kann, den Fahrer noch in einem gewissen Maße den Querbeschleunigungsverlauf spüren zu lassen. Insbesondere kann in einem Chauffeursmodus vorgesehen sein, dass eine Kompensation nur für den Passagiersitz 3 und gegebenenfalls weitere Passagiersitze zur Verfügung steht.

So ist es letztlich, da mit den Einzelsitzen gearbeitet wird, für jeden Insassen möglich, seine "Wohlfühleinstellungen" vorzunehmen bzw. zu wählen. Damit geht eine weitere Komfortsteigerung einher.

Optional und daher nur gestrichelt in Fig. 2 eingezeichnet ist es im erfindungsgemäßen Verfahren auch möglich, eine Nachregelung vorzunehmen. Hierfür sind Sensoren vorgesehen, die die tatsächliche, aktuelle Fahrdynamik vermessen können, vorliegend beispielsweise ein Querbeschleunigungssensor 12 und ein Wankwinkelsensor 13. Deren Messsignale werden gemäß dem Pfeil 15 zum Steuergerät 5 zurückgeführt, um kleinere Abweichungen des vorbestimmten Querbeschleunigungsverlaufs vom tatsächlichen Querbeschleunigungsverlauf durch eine entsprechende Korrektur der Stellgrößen nachkorrigieren zu können. Wird z. B. grundsätzlich in einem Winkelbereich von bis zu 7° oder bis zu 10° gewankt, so kann eine kleinere Nachkorrektur, beispielsweise im Bereich von 0,5°, schnell genug durch entsprechende Nachführung realisiert werden, um dennoch einen Komfortgewinn zu erreichen.

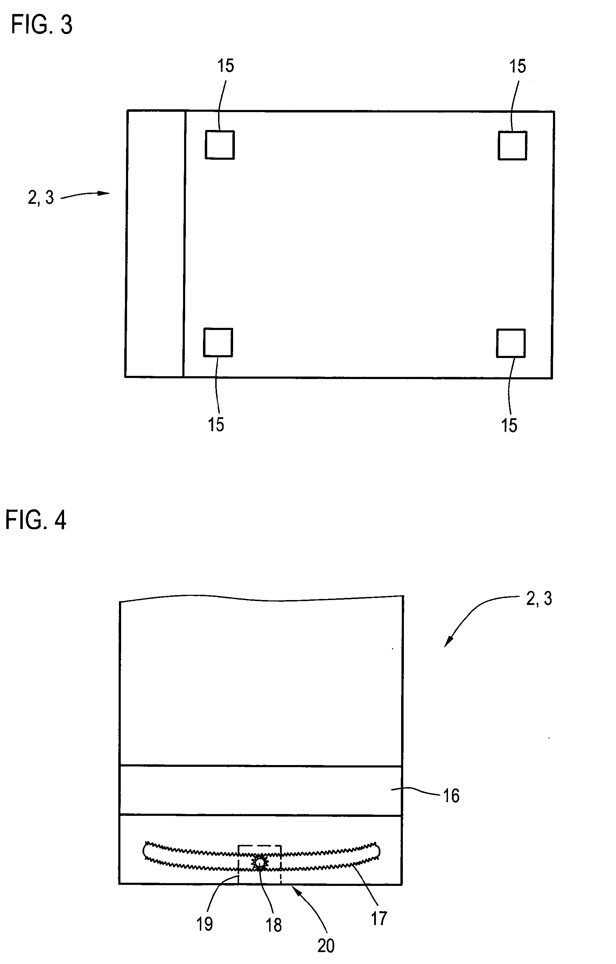

Die Fig. 3 und 4 zeigen mögliche einfach realisierbare Ausgestaltungen der Aktorik 4 an den Sitzen 2, 3, wobei in Fig. 3 eine Möglichkeit dargestellt ist, im Wesentlichen an den vier Ecken unterhalb einer Sitzfläche eines Sitzes 2, 3 jeweils einen höhenverstellbaren Aktor 15 vorzusehen. Dabei sei darauf hingewiesen, dass durch ungleichmäßige Höhenverstellung der Aktoren 15 auch eine Veränderung der Wankachse in einem bestimmten Rahmen in diesem Ausführungsbeispiel möglich ist. Die Aktoren 15 können beispielsweise als pneumatische und/oder hydraulische Aktoren realisiert werden, es sind jedoch auch andere Möglichkeiten, beispielsweise über Linearmotoren oder dergleichen, denkbar.

Fig. 4 zeigt schließlich schematisch als Prinzipskizze eine weitere Möglichkeit zur Realisierung einer Aktorik, mit der eine vom Ort der Aktorik weit entfernte Wankachse, die beispielsweise im Bereich es Herzens einer auf dem Sitz 2, 3 befindlichen Person liegen kann, möglich ist. Dabei ist unterhalb der Sitzfläche 16 eine eine Kreisbahn, deren Mittelpunkt die Wankachse bildet, nachbildende Führung 17 vorgesehen, deren Innenrand im Ausführungsbeispiel gezahnt realisiert ist. In diese Zähne greift ein Zahnrad 18 ein, welches über einen hier nur angedeuteten Motor 19, gegebenenfalls mit einem zwischengeschalteten Getriebe, betrieben wird. Auf diese Weise wird bei einer Drehung des Zahnrades 18 dieses in der Führung bewegt, so dass der gesamte Sitz 2, 3 verkippt wird. Ein solcher Aktor 20 kann selbstverständlich auch auf andere im Stand der Technik bekannte Arten realisiert werden.

Es sei abschließend noch angemerkt, dass, obwohl die Fig. 2 lediglich beispielhaft für einen Sitz das erfindungsgemäße Verfahren illustriert, die Steuereinheit 5 bei mehreren Sitzen 2, 3, an denen eine Kompensation stattfinden soll, selbstverständlich für jeden dieser Sitze 2, 3 die Stellgrößen gemäß den Pfeilen 10, 11 ausgibt.

## Patentansprüche

1. Verfahren zur Ansteuerung einer zur Verkippung eines Sitzes (2, 3) eines Kraftfahrzeugs (1) um einen Wankwinkel und/oder einen Nickwinkel ausgebildeten Aktorik (4),
**dadurch gekennzeichnet,**
**dass** aus einem für eine Vorausschaudauer vorausberechneten Quer- und/oder Längsbeschleunigungsverlauf, der aus Daten eines teilautomatischen oder vollautomatischen Fahrzeugsystems (6) zur Quer- und/oder Längsführung des Kraftfahrzeugs (1) ermittelt wird, ein Verlauf eines die auf eine auf dem Sitz (2, 3) sitzende Person wirkende Querbeschleunigung wenigstens teilweise kompensierenden Wankwinkels und/oder eines die auf eine auf dem Sitz (2, 3) sitzende Person wirkende Längsbeschleunigung wenigstens teilweise kompensierenden Nickwinkels des Kraftfahrzeugs (1) ermittelt wird und die Aktorik (4) zur zumindest annähernd phasengleich mit dem Quer- und/oder Längsbeschleunigungsverlauf erfolgenden Verkippung des Sitzes (2, 3) anhand des Wankwinkelverlaufs und/oder des Nickwinkelverlaufs angesteuert wird.

2. Verfahren nach Anspruch 1,
**dadurch gekennzeichnet,**
**dass** die Wankachse und/oder die Nickachse der Aktorik (4) verändert wird.

3. Verfahren nach Anspruch 1 oder 2,
**dadurch gekennzeichnet,**
**dass** eine im Bereich des Herzens einer auf dem Sitz (2, 3) sitzenden Person verlaufende Wankachse und/oder Nickachse verwendet wird.

4. Verfahren nach einem der vorangehenden Ansprüche,
**dadurch gekennzeichnet,**
**dass** für wenigstens zwei eine Aktorik (4) umfassende Sitze (2, 3) des Kraftfahrzeugs (1) die Kompensation anhand unterschiedlicher Kompensationsparameter eingestellt wird, wobei die Kompensationsparameter insbesondere die Stärke der Kompensation und/oder die Wankachse und/oder die Nicksachse enthalten.

5. Verfahren nach Anspruch 4,
**dadurch gekennzeichnet,**
**dass** die unterschiedlichen Kompensationsparameter durch einen Benutzer ausgewählt werden.

6. Verfahren nach Anspruch 4 oder 5,
**dadurch gekennzeichnet,**
**dass** wenigstens ein Satz von Kompensationsparametern als ein Profil abgespeichert wird und/oder einer aus mehreren abgespeicherten Sätzen von Kompensationsparametern ausgewählt wird.

7. Verfahren nach einem der vorangehenden Ansprüche,
**dadurch gekennzeichnet,**
**dass** in einem Chauffeursmodus eine Verkippung der Sitze (2, 3) zur Kompensation nur für wenigstens einen Passagiersitz (3) erfolgt.

8. Verfahren nach einem der vorangehenden Ansprüche,
**dadurch gekennzeichnet,**
**dass** wenigstens ein fahrdynamischer Sensor, insbesondere ein Querbeschleunigungssensor (12) und/oder ein Längsbeschleunigungssensor und/oder ein Wankwinkelsensor (13) und/oder ein Nickwinkelsensor verwendet werden, deren Sensordaten im Rahmen einer Nachregelung verwendet werden.

9. Verfahren nach Anspruch 8,
**dadurch gekennzeichnet,**
**dass** die vorausberechnete Fahrdynamik mit der gemessenen Fahrdynamik verglichen wird und bei Abweichungen eine Korrektur der Stellgrößen zur Ansteuerung der Aktorik (4) erfolgt.

10. Verfahren nach einem der vorangehenden Ansprüche,
**dadurch gekennzeichnet,**
**dass** zur Ansteuerung der Aktorik (4) wenigstens eine Stellgröße auf der Basis eines Sitz-Aktormodells berechnet wird.

11. Verfahren nach Anspruch 10,
**dadurch gekennzeichnet,**
**dass** der Zeitpunkt zur Ansteuerung der Aktorik (4) mit der Stellgröße auf der Basis eines Aktormodells bestimmt wird.

12. Verfahren nach einem der vorangehenden Ansprüche,
**dadurch gekennzeichnet,**
**dass** bei vorgegebene Fahrsituation zumindest am Fahrersitz (2) keine Kompensation der Querbeschleunigung und/oder Längsbeschleunigung erfolgt.

13. Kraftfahrzeug (1), umfassend wenigstens einen Sitz (2, 3) mit einer zur Verkippung des Sitzes (2, 3) um einen Wankwinkel und/oder einen Nickwinkel ausgebildeten Aktorik (4) und ein zur Ansteuerung der Aktorik (4) ausgebildetes Steuergerät (5),
dadruch gekennzeichnet, dass das Steuergerät zur Durchführung eines Verfahrens nach einem der vorangehenden Ansprüche ausgebildet ist.

## Claims

1. Method of controlling an actuator system (4) for tipping a seat (2, 3) of a motor vehicle (1) about a roll angle and/or a pitch angle
**characterised in that**
from a lateral and/or longitudinal course of acceleration, previously calculated for a foreseeable duration and determined from data of a partly or fully automatic vehicle system (6) for the lateral and/or longitudinal movement of the motor vehicle (1), a course of a roll angle at least partially compensating a lateral acceleration acting on a person sitting in on the seat (2, 3) and/or a pitch angle at least partially compensating a longitudinal acceleration of the vehicle (1) acting on a person sitting on the seat (2, 3) is determined, and the actuator system (4) for tilting the seat (2, 3) approximately phase-identically with the lateral and/or longitudinal acceleration is controlled by means of the course of the roll angle and/or the course of the pitch angle.

2. Method according to claim 1
**characterised in that**
the roll axis and/or the pitch axis of the actuator system (4) is changed.

3. Method according to claim 1 or 2
**characterised in that**
a roll axis and/or a pitch axis passing through the area of the heart of a person sitting on the seat (2, 3) is used.

4. Method according to any one of the preceding claims
**characterised in that**
for at least two seats (2, 3) of the motor vehicle (1) having an actuator system (4) the compensation is adjusted by means of various compensation parameters, wherein the compensation parameters more particularly include the magnitude of the compensation and/or the roll axis and/or the pitch axis.

5. Method according to claim 4
**characterised in that**
the various compensation factors are selected by a user.

6. Method according to claim 4 or 5
**characterised in that**
at least one set of compensation parameters is stored as a profile and/or one of several stored sets of compensation parameters is selected.

7. Method according to any one of the preceding claims
**characterised in that**
in a driver mode tilting of the seats (2, 3) for compensation only takes place for at least one passenger seat (3).

8. Method according to any one of the preceding claims
**characterised in that**
at least one drive-dynamic sensor, more particularly a lateral acceleration sensor (12) and/or a longitudinal acceleration sensor and/or a roll angle sensor (13) and/or a pitch angle sensor is/are used, the sensor data of which are used for re-adjustment.

9. Method according to claim 8
**characterised in that**
the previously calculated drive dynamics are compared with the measured drive dynamics and in the event of deviations correction of the control variables for controlling the actuator system (4) takes place.

10. Method according to any one of the preceding claims
**characterised in that**
to control the actuator system (4) at least one control variable is calculated on the basis of a seat actuator model.

11. Method according to claim 10
**characterised in that**
the time of controlling the actuator system (4) is determined by the control variable based on an actuator model.

12. Method according to any one of the preceding claims
**characterised in that**
in a predetermined driving situation at least on the driver's seat (2) no compensation of the lateral acceleration and/or longitudinal acceleration takes place.

13. Motor vehicle (1), comprising at least one seat (2, 3) with an actuator system (4) designed to tilt the seat (2, 3) about a roll angle and/or a pitch angle and a control device (5) designed for operating the actuator system (4),
**characterised in that** the control device is designed for implementing a method according to any one of the preceding claims.

## Revendications

1. Procédé de commande d'un système d'actionneurs (4) conçu pour basculer un siège (2, 3) d'un véhicule automobile (1) suivant un angle de roulis et/ou un angle de tangage, **caractérisé en ce que**, à partir d'une courbe d'accélération transversale et/ou longitudinale calculée à l'avance pour une durée prévisionnelle, laquelle courbe est déterminée à partir de données d'un système de véhicule (6) partiellement ou totalement automatique pour le guidage transversal et/ou longitudinal du véhicule automobile (1), on détermine une courbe d'un angle de roulis compensant au moins partiellement l'accélération transversale agissant sur une personne assise sur le siège (2, 3) et/ou une courbe d'un angle de tangage du véhicule automobile (1) compensant au moins partiellement l'accélération longitudinale agissant sur une personne assise sur le siège (2, 3) et on commande le système d'actionneurs (4) à l'aide de la courbe d'angle de roulis et/ou de la courbe d'angle de tangage pour le basculement du siège (2, 3) s'effectuant au moins approximativement en phase avec la courbe d'accélération transversale et/ou longitudinale.

2. Procédé selon la revendication 1, **caractérisé en ce qu'**on modifie l'axe de roulis et/ou l'axe de tangage du système d'actionneurs (4).

3. Procédé selon la revendication 1 ou 2, **caractérisé en ce qu'**on utilise un axe de roulis et/ou un axe de tangage passant par la zone du coeur d'une personne assise sur le siège (2, 3).

4. Procédé selon l'une des revendications précédentes, **caractérisé en ce que**, pour au moins deux sièges (2, 3) du véhicule automobile (1) qui comprennent un système d'actionneurs (4), on règle la compensation à l'aide de paramètres de compensation différents, les paramètres de compensation contenant notamment l'intensité de la compensation et/ou l'axe de roulis et/ou l'axe de tangage.

5. Procédé selon la revendication 4, **caractérisé en ce que** les paramètres de compensation différents sont choisis par un utilisateur.

6. Procédé selon la revendication 4 ou 5, **caractérisé en ce qu'**on mémorise au moins un jeu de paramètres de compensation comme profil et/ou on choisit un jeu parmi plusieurs jeux mémorisés de paramètres de compensation.

7. Procédé selon l'une des revendications précédentes, **caractérisé en ce que**, dans un mode chauffeur, un basculement des sièges (2, 3) pour la compensation ne s'effectue que pour au moins un siège de passager (3).

8. Procédé selon l'une des revendications précédentes, **caractérisé en ce qu'**on utilise au moins un capteur de dynamique de mouvement, notamment un capteur d'accélération transversale (12) et/ou un capteur d'accélération longitudinale et/ou un capteur d'angle de roulis (13) et/ou un capteur d'angle de tangage, capteurs dont les données sont utilisées dans le cadre d'une post-régulation.

9. Procédé selon la revendication 8, **caractérisé en ce qu'**on compare la dynamique de mouvement calculée à l'avance et la dynamique de mouvement mesurée et, en présence d'écarts, on effectue une correction des grandeurs réglantes pour la commande du système d'actionneurs (4).

10. Procédé selon l'une des revendications précédentes, **caractérisé en ce que**, pour la commande du système d'actionneurs (4), on calcule au moins une grandeur réglante sur la base d'un modèle de système d'actionneurs de siège.

11. Procédé selon la revendication 10, **caractérisé en ce qu'**on détermine l'instant pour la commande du système d'actionneurs (4) avec la grandeur réglante sur la base d'un modèle de système d'actionneurs.

12. Procédé selon l'une des revendications précédentes, **caractérisé en ce que**, en présence d'une situation de roulage donnée, aucune compensation de l'accélération transversale et/ou de l'accélération longitudinale ne s'effectue au moins sur le siège de conducteur (2).

13. Véhicule automobile (1), comprenant au moins un siège (2, 3) avec un système d'actionneurs (4) conçu pour basculer le siège (2, 3) suivant un angle de roulis et/ou un angle de tangage et un appareil de commande (5) conçu pour commander le système d'actionneurs (4), **caractérisé en ce que** l'appareil de commande est conçu pour la mise en oeuvre d'un procédé selon l'une des revendications précédentes.
